# EUROPEAN PATENT APPLICATION

(11) **EP 3 447 708 A1**
(43) Date of publication of application: **27.02.2019**
(21) Application number: 18189966.7
(22) Date of filing: 21.08.2018
(51) Int. Cl.: G06Q 30/00, G06Q 20/40, G06Q 20/20, G07G 1/00, G08B 13/24, G06K 17/00

(54) **SALES MANAGEMENT SYSTEM AND SALES MANAGEMENT METHOD**

(30) Priority: 21.08.2017 JP 2017158519
(71) Applicant: Toshiba TEC Kabushiki Kaisha, Tokyo 141-8562 (JP)
(72) Inventor: MIYAGI, Daisuke, Shinagawa-ku,, Tokyo 141-8562 (JP)
(74) Representative: Takeuchi, Maya

(57) **Abstract**

According to an embodiment, a sales management system includes a processor and a memory. The memory stores an unidentified product list in association with a purchaser who comes into a store. The processor determines at least one purchaser who may have taken out a product from a display area on the basis of a monitoring result of a motion of the purchaser and a movement of the product from the display area thereof. The processor updates, when the purchaser who has taken out the product from the display area fails to be identified, the unidentified product list associated with the determined at least one purchaser, the updated unidentified product list including an identification code of the taken-out product.

## Description

### FIELD

The present invention relates to the field of a sales management technology in general, and embodiments to be described herein relate in particular to a sales management system and a sales management method.

### BACKGROUND

There is already known a technique of automatically performing sales registration by adding a product, which has been taken out of a display area by a purchaser, to a purchased product list of that purchaser, in a store where products are displayed and sold. Specifically, when a product is moved from a display area thereof, this technique identifies a purchaser who has moved the product. This technique then adds an identification code of the moved product to a purchased product list associated with the identified purchaser.

In a case where a plurality of purchasers are present in the vicinity of the display area, however, it may be difficult to identify which purchaser has taken out the product. In this case, the store has had difficulty of suitably handling such a product. In the circumstances as described above, there has been a demand to suitably handle a product in a store in a case where the store fails to identify a purchaser who has taken out the product.

### SUMMARY OF INVENTION

To solve such problem, there is provided a sales management system that manages a purchased product of a purchaser who comes into a store, the sales management system comprising:
a sensor that outputs detected data on a motion of the purchaser and a movement of a product from a display area of the product;
a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser; and
a processor that
   monitors the motion of the purchaser and the movement of the product from the display area on the basis of the detected data output from the sensor,
   identifies, when the product is moved from the display area, the purchaser who has taken out the product from the display area on the basis of a monitoring result,
   updates, when the purchaser is identified, the purchased product list associated with the identified purchaser, the updated purchased product list including the identification code of the product,
   determines at least one purchaser who may have taken out the product from the display area on the basis of the monitoring result, and
   updates, when the purchaser fails to be identified, the unidentified product list associated with the determined at least one purchaser, the updated unidentified product list including the identification code of the product.

Preferably, the processor
determines the purchaser who comes into the store on the basis of the monitoring result, and
creates the unidentified product list associated with the purchaser who comes into the store.

Preferably still, the sales management system further comprises
a communication interface that communicates with an information processing terminal operated by a sales-person of the store and portable information terminals operated by a plurality of purchasers, wherein
the processor
transmits data of the unidentified product list to a predetermined terminal among the information processing terminal and the portable information terminals of the plurality of purchasers via the communication interface, and thereby
performs notification processing for notifying a notification target person of details of the unidentified product list, the notification target person operating the predetermined terminal.

Preferably yet, the processor transmits the data of the unidentified product list to the portable information terminal operated by the purchaser associated with the unidentified product list, the portable information terminal being as the predetermined terminal.

Suitably, the processor transmits, when the unidentified product list is updated, the data of the updated unidentified product list to the portable information terminal operated by the purchaser associated with the updated unidentified product list.

Suitbaly still, the processor
classifies a product identified by the identification code included in the unidentified product list as a purchased product to be purchased by the purchaser associated with the unidentified product list or not,
updates the purchased product list associated with the purchaser who is the same as the purchaser associated with the unidentified product list, the updated purchased product list including the identification code of the product classified as the purchased product, and
updates the unidentified product list, the updated unidentified product list excluding the identification code included in the purchased product list.

Suitbaly yet, when the processor determines that the purchaser has passed through a first predetermined place in the store on the basis of the monitoring result, if the unidentified product list associated with the purchaser who has passed through the first predetermined place includes the identification code,
the processor
transmits the data of the unidentified product list to the information processing terminal via the communication interface, and thereby
performs the notification processing as processing for notifying a sales-person of details of the unidentified product list.

Typically, when the processor determines that the purchaser has passed through the first predetermined place and through a second predetermined place in the store on the basis of the monitoring result,
the processor makes payment for the product identified by the product code included in the purchased product list associated with the purchaser who has passed through the first predetermined place and the second predetermined place.

Typically still, if the unidentified product list associated with the purchaser who has passed through the first predetermined place and the second predetermined place after completion of the payment includes the identification code,
the processor creates unidentified history data associated with the purchaser, the unidentified history data including the unidentified product list.

The invention also relates to a sales management method for a sales management system that manages a purchased product of a purchaser who comes into a store, the sales management system including a sensor that outputs detected data on a motion of the purchaser and a movement of a product from a display area of the product in a store, and a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser, the sales management method comprising:
monitoring the motion of the purchaser and the movement of the product from the display area on the basis of the detected data output from the sensor;
identifying, when the product is moved from the display area, the purchaser who has taken out the product from the display area on the basis of a monitoring result;
updating, when the purchaser is identified, the purchased product list associated with the identified purchaser, the updated purchased product list including the identification code of the product;
determining at least one purchaser who may have taken out the product from the display area on the basis of the monitoring result; and
updating, when the purchaser fails to be identified, the unidentified product list associated with the determined at least one purchaser, the updated unidentified product list including the identification code of the product.

The invention also concerns a non-transitory computer readable medium storing a program causing a computer to execute the method described above.

The invention further relates to a sales management apparatus that manages a purchased product of a purchaser who comes into a store, the sales management system comprising:
a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser; and
a processor that
   monitors a motion of the purchaser and a movement of the product from a display area on the basis of a detected data output from a sensor disposed within the store;
   identifies, when the product is moved from the display area, the purchaser who has taken out the product from the display area on the basis of a monitoring result,
   updates, when the purchaser is identified, the purchased product list associated with the identified purchaser, the updated purchased product list including the identification code of the product,
   determines at least one purchaser who may have taken out the product from the display area on the basis of the monitoring result, and
   updates, when the purchaser fails to be identified, the unidentified product list associated with the determined at least one purchaser, the updated unidentified product list including the identification code of the product.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram showing a schematic configuration of a store system according to an embodiment.
Fig. 2 is a diagram showing an example of an unidentified product list that is stored in a main memory of a sales management apparatus according to the embodiment.
Fig. 3 is a flowchart showing information processing, of a processor, for sales registration in the sales management system according to the embodiment.
Fig. 4 is a diagram showing an example of a confirmation screen in the sales management system according to the embodiment.
Fig. 5 is a diagram showing the confirmation screen in the sales management system according to the embodiment, after a purchaser touches checkboxes.
Fig. 6 is a diagram showing another example of the confirmation screen in the sales management system according to the embodiment.
Fig. 7 is a flowchart showing information processing, of the processor, for checking the unidentified product list in the sales management system according to the embodiment.
Fig. 8 is a diagram showing an example of an alert screen in the sales management system according to the embodiment.

### DETAILED DESCRIPTION

According to one embodiment, a sales management system manages a purchased product of a purchaser who comes into a store. The sales management system includes a sensor, a memory, and a processor. The sensor outputs detected data on a motion of the purchaser and a movement of a product from a display area of the product. The memory stores a purchased product list and an unidentified product list in association with the purchaser who comes into the store. The purchased product list is a list of an identification code of a product identified as having been taken out of the display area by the associated purchaser. The unidentified product list is a list of an identification code of a product that is not identified as having been taken out of the display area but may have been taken out of the display area by the associated purchaser. The processor monitors the motion of the purchaser and the movement of the product from the display area on the basis of the detected data output from the sensor. The processor identifies, when the product is moved from the display area, the purchaser who has taken out the product from the display area on the basis of a monitoring result. The processor updates, when the purchaser is identified, the purchased product list associated with the identified purchaser, the updated purchased product list including the identification code of the product. The processor determines at least one purchaser who may have taken out the product from the display area on the basis of the monitoring result. Further, the processor updates, when the purchaser fails to be identified, the unidentified product list associated with the determined at least one purchaser, the updated unidentified product list including the identification code of the product.

Hereinafter, an example of an embodiment will be described with reference to the drawings. It should be noted that a sales management apparatus having all functions as a sales management system will be described as an example in this embodiment. In the drawings, identical reference symbols represent identical or similar portions.

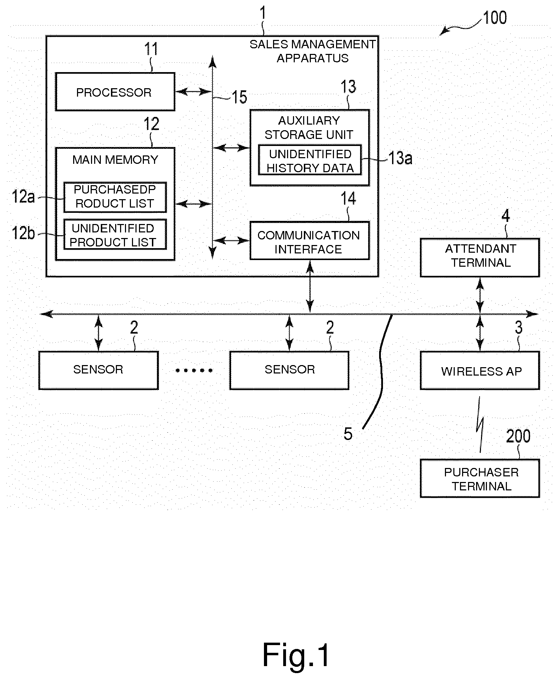

Fig. 1 is a block diagram showing a sales management apparatus 1 according to this embodiment and a store system 100 including the sales management apparatus 1. The store system 100 connects the sales management apparatus 1, a plurality of sensors 2, a wireless access point (wireless AP) 3, and an attendant terminal 4 to a network 5. It should be noted that, in Fig. 1, a single wireless access point 3 and a single attendant terminal 4 are connected to the network 5, but a plurality of wireless access points 3 and a plurality of attendant terminals 4 may be connected to the network 5.

The sales management apparatus 1 performs various types of processing for managing sales of products that are displayed and sold in the store. The processing performed by the sales management apparatus 1 includes information processing to be described later. The sensors 2 are dispersedly disposed within the store. The sensors 2 each detect a movement of a product from a display area thereof, a motion of a purchaser (a position of the purchaser and an operation of the purchaser), and the like and output detected data on the motion of the purchaser and the movement of the product. Each of the sensors 2 is typically a video camera. However, for the sensors 2, any other sensors such as a weight sensor, an optical sensor, and a wireless tag receiver may be variously used. Further, for the sensors 2, various types of those sensors described above may be used in combination. The wireless access point 3 connects a wireless terminal to the network 5 via a wireless line. The wireless terminal with which the wireless access point 3 communicates includes a portable information terminal (hereinafter, referred to as purchaser terminal) 200 such as a smartphone carried and operated by a purchaser.

The attendant terminal 4 is an information processing terminal that performs information processing for notifying a sales-person of various types of information, and information processing corresponding to an operation of the sales-person. For hardware of the attendant terminal 4, for example, a personal computer and a tablet the computer can be used. The network 5 transmits data to be exchanged between the connected units. For the network 5, one having an arbitrary type is appropriately applicable, but a local area network (LAN) established within the store is typically applied.

The sales management apparatus 1 includes a processor 11, a main memory 12, an auxiliary storage unit 13, a communication interface 14, and a transmission system 15.

The processor 11, the main memory 12, the auxiliary storage unit 13, and the communication interface 14 are connected to one another by the transmission system 15. The processor 11, the main memory 12, and the auxiliary storage unit 13 are connected to one another by the transmission system 15, and thus configure a computer that performs information processing for controlling the sales management apparatus 1. The processor 11 corresponds to a central portion of the computer described above. The processor 11 controls the respective units so as to achieve various functions of the sales management apparatus 1 according to the operating system and application programs.

The main memory 12 corresponds to a main storage portion of the computer described above. The main memory 12 includes a nonvolatile memory area and a volatile memory area. The main memory 12 stores the operating system and the application programs in the nonvolatile memory area. Further, the main memory 12 may store data, which is necessary for the processor 11 executing processing for controlling the respective units, in the nonvolatile or volatile memory area. The main memory 12 uses the volatile memory area as a work area in which the processor 11 appropriately rewrites data.

The auxiliary storage unit 13 corresponds to an auxiliary storage portion of the computer described above. For the auxiliary storage unit 13, for example, an electric erasable programmable read-only memory (EEPROM), a hard disc drive (HDD), a solid state drive (SSD), or other various well-known storage devices can be used. The auxiliary storage unit 13 stores data to be used when the processor 11 performs various types of processing, and data generated by the information processing of the processor 11. The auxiliary storage unit 13 may store application programs. One of the application programs stored in the main memory 12 or the auxiliary storage unit 13 is a sales management program that describes a procedure of information processing to be descried later.

The communication interface 14 performs data communication via the network 5. For example, the communication interface 14 performs well-known processing for data communication via the LAN, for example. The transmission system 15 includes an address bus, a data bus, a control signal line, or the like, an interface circuit, or the like, and transmits data and a control signal that are to be exchanged between the connected units.

A part of the storage area of the main memory 12 is used to store a purchased product list 12a and an unidentified product list 12b. The purchased product list 12a and the unidentified product list 12b are stored in the main memory 12 in association with each purchaser within the store. The purchased product list 12a is a list of an identification code (product code to be described later) of a product identified as having been taken out of the display area by the associated purchaser (hereinafter, referred to as purchased product). The unidentified product list 12b is a list of an identification code (product code to be described later) of a product that is not identified as having been taken out of the display area but may have been taken out of the display area by the associated purchaser (hereinafter, referred to as unidentified product).

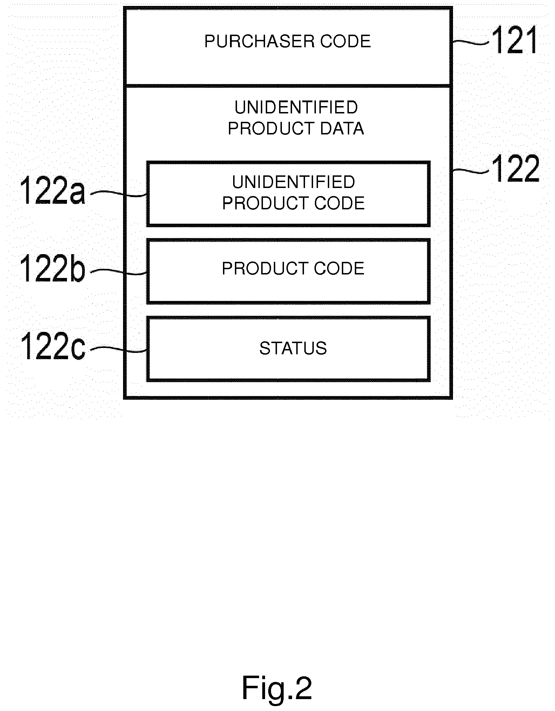

Fig. 2 is a diagram showing an example of the unidentified product list 12b. The unidentified product list 12b includes a purchaser code 121 and unidentified product data 122. The purchaser code 121 is an identification code for identifying the associated purchaser. The unidentified product data 122 is data for individually managing unidentified products. Therefore, the unidentified product data 122 may not be included in the unidentified product list 12b, or pieces of unidentified product data 122 may be included therein. The unidentified product data 122 further includes an unidentified product code 122a, a product code 122b, and a status 122c. The unidentified product code 122a is an identification code that is assigned so as not to overlap the unidentified product codes assigned to other unidentified products each time an unidentified product occurs. The product code 122b is an identification code of a product as an unidentified product. The status 122c represents a confirmation state related to the unidentified product. In this embodiment, the status 122c indicates any one of "unconfirmed", "denied", and "confirmed".

A part of the storage area of the auxiliary storage unit 13 shown in Fig. 1 is used for storing unidentified history data 13a. It should be noted that details of the unidentified history data 13a will be described later.

Next, an operation of the store system 100 configured as described above will be described. When doing some shopping in a store provided with the store system 100, a purchaser executes, in advance, an application for using the store system 100 in a purchaser terminal 200 carried and operated by the purchaser. It should be noted that the communication setting for the purchaser terminal 200 is performed in advance such that the purchaser terminal 200 can perform communication via the wireless access point 3 within the communication area of the wireless access point 3. Further, the purchaser makes user registration and then receives an assigned purchaser code in advance, and also makes user setting such as registration of credit card information for payment in advance.

When determining that the purchaser has come into the store on the basis of detected data that is output from the sensors 2, the processor 11 creates a purchased product list 12a and an unidentified product list 12b, which are associated with the purchaser, in the main memory 12. Note that at this point of time the purchased product list 12a does not include a product code, and the unidentified product list 12b does not include unidentified product data 122. The processor 11 monitors a movement of a product displayed in a display area thereof, a position of the purchaser, an operation of the purchaser, and the like on the basis of the detected data output from the sensors 2. In other words, the processor 11 collects and analyzes the detected data of the sensors 2, to perform the monitoring described above. It should be noted that specific processing for this monitoring is not a feature of this embodiment, and an existing technique can be used therefor, for example. Thus, detailed description thereof will be omitted.

When recognizing that a product has been taken out of a display area on the basis of the detected data output from the sensors 2, the processor 11 starts information processing for making sales registration for that product (hereinafter, referred to as taken-out product). It should be noted that, when recognizing that another product has been taken out during execution of the information processing, the processor 11 executes a plurality of types of information processing in parallel.

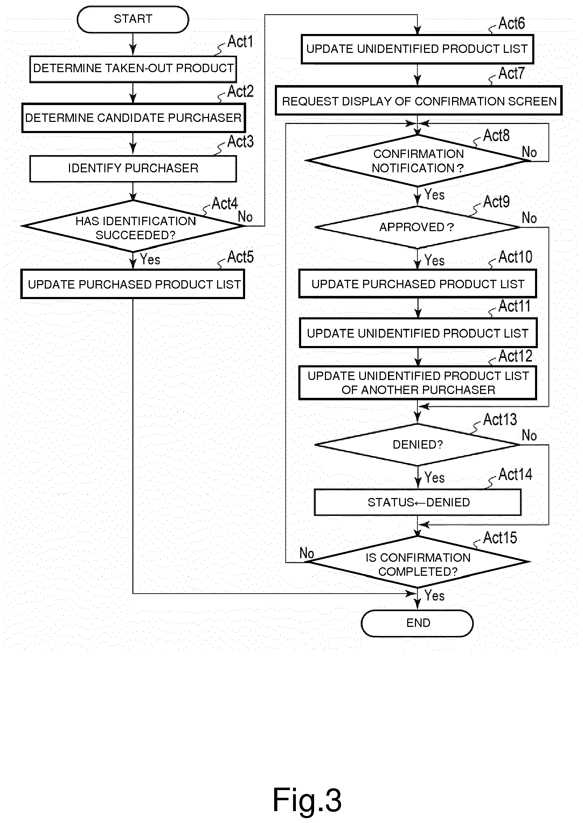

Fig. 3 is a flowchart showing the information processing, of the processor 11, for performing sales registration. The processor 11 executes the information processing according to a sales management program stored in the main memory 12 or the auxiliary storage unit 13. It should be noted that details of the information processing to be described below are examples. For the information processing to be described below, various types of information processing capable of obtaining a similar result can be appropriately used.

In Act1, the processor 11 recognizes that a product has been taken out on the basis of the detected data output from the sensors 2, and determines a taken-out product. In other words, the processor 11 determines a product code of the taken-out product. In Act2, the processor 11 determines candidate purchasers as purchasers who may have taken out the taken-out product on the basis of the detected data output from the sensors 2. It should be noted that the candidate purchasers include a single candidate purchaser or a plurality of candidate purchasers. The processor 11 executes the information processing based on the sales management program in such a manner, and thus the computer including the processor 11 as the central portion functions as determination means.

In Act3, the processor 11 tries to identify the purchaser who has taken out the taken-out product, from among the candidate purchasers described above. For example, the processor 11 calculates a score representing the magnitude of possibility of having taken out the taken-out product on the basis of a position or an operation of each of the candidate purchasers, and tries to identify the purchaser on the basis of those scores. The processor 11 executes the information processing based on the sales management program in such a manner, and thus the computer including the processor 11 as the central portion functions as identification means. It should be noted that specific details of the processing of Act1 to Act3 are not features of this embodiment, and an existing technique can be used therefor, for example. Thus, detailed description thereof will be omitted.

In Act4, the processor 11 determines whether the purchaser who has taken out the taken-out product can be identified or not. When determining that the purchaser has been identified, the processor 11 determines Yes and proceeds to processing of Act5. In Act5, the processor 11 updates the purchased product list 12a associated with the purchaser code of the purchaser identified in Act3 such that the product code determined in Act1 is included in the purchased product list 12a. The processor 11 executes the information processing based on the sales management program in such a manner, and thus the computer including the processor 11 as the central portion functions as first update means. The processor 11 subsequently terminates the information processing shown in Fig. 3.

On the other hand, when failing to identify a purchaser, the processor 11 determines No in Act4 and proceeds to processing of Act6. In Act6, the processor 11 updates the unidentified product list 12b (see Fig. 2) associated with each of the candidate purchasers determined in Act2. Specifically, the processor 11 issues an unidentified product code 122a that does not overlap any one of the unidentified product codes 122a included in all the unidentified product data 122 stored in the main memory 12. The processor 11 then creates unidentified product data 122 including the issued unidentified product code 122a, the product code determined in Act1, and the status 122c indicating "unconfirmed". The processor 11 adds the created unidentified product data 122 to the unidentified product list 12b corresponding thereto. The processor 11 executes the information processing based on the sales management program in such a manner, and thus the computer including the processor 11 as the central portion functions as second update means.

In Act7, the processor 11 requests the purchaser terminal 200 of the candidate purchaser to display a confirmation screen. Specifically, the processor 11 transmits request data, which includes screen data for displaying the confirmation screen, from the communication interface 14 to the corresponding purchaser terminal 200 via the network 5. The screen data for displaying the confirmation screen includes data of the corresponding purchased product list 12a and data of the corresponding unidentified product list 12b (see, e.g., Fig. 2). The request data is transmitted to the corresponding purchaser terminal 200 via the network 5 and the wireless access point 3. When receiving the request data thus transmitted, the purchaser terminal 200 displays the confirmation screen on the basis of the screen data described above. It should be noted that, in a case where there are a plurality of candidate purchasers, the processor 11 transmits request data created for each of the plurality of purchaser terminals 200 to each of the plurality of purchaser terminals 200 of those candidate purchasers. The processing of requesting to display the confirmation screen is an example of notification processing for notifying a purchaser, as a predetermined notification target person, of the details of the unidentified product list 12b. The processor 11 executes the information processing based on the sales management program in such a manner, and thus the computer including the processor 11 as the central portion functions as notification means.

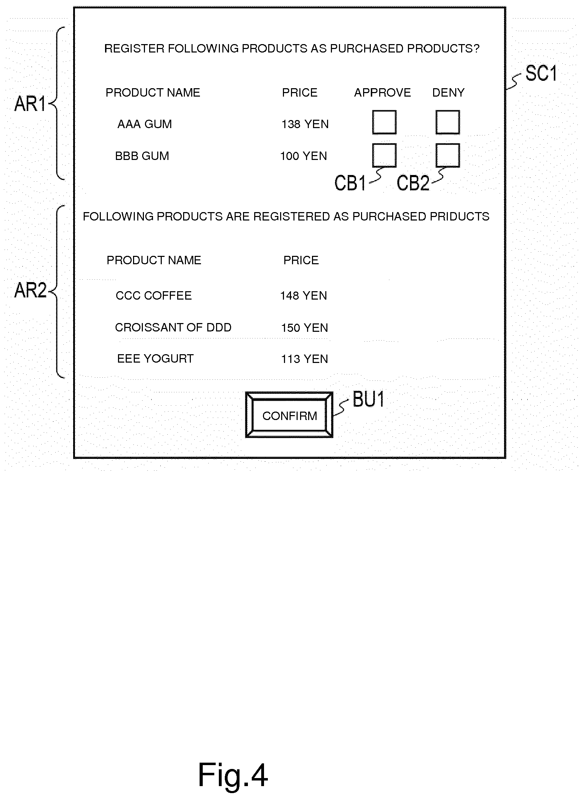

Fig. 4 is a diagram showing a confirmation screen SC1 as an example. The confirmation screen SC1 includes areas AR1 and AR2 and a button BU1. The area AR1 shows a list of unidentified products and also displays a graphical user interface (GUI) image for receiving an instruction to determine whether to register the unidentified products as products to be purchased (purchased products). Specifically, the area AR1 displays a product name, a price, and checkboxes CB1 and CB2 of "approve" and "deny", for each of the products distinguished by the product codes included in the unidentified product list 12b associated with each candidate purchaser.

It should be noted that the confirmation screen SC1 is an example in a case where, when the unidentified product list 12b associated with a first purchaser already includes an "AAA gum" and the status 122c thereof indicates "unconfirmed", a "BBB gum" is newly set as an unidentified product and the first purchaser is determined as one of candidate purchasers for the "BBB gum". Therefore, the confirmation screen SC1 is displayed on the purchaser terminal 200 of the first purchaser.

The area AR2 displays a list of purchased products. Specifically, the area AR2 displays a product name and a price for each of the products distinguished by the product codes included in the purchased product list 12a associated with each candidate purchaser. The button BU1 is a button for the purchaser to give an instruction to terminate display of the confirmation screen SC1. It should be noted that, when creating the screen data of the confirmation screen SC1, the processor 11 acquires the product name and the price from a predetermined product database, for example.

When the confirmation screen is displayed on the purchaser terminal 200 of the purchaser, that purchaser determines whether the purchaser has taken out the product displayed in the area AR1 from the display area or not. If the purchaser has taken out that product and confirms that the product is not correctly included in the list displayed in the area AR2, the purchaser touches the checkbox CB1 of "approve". Alternatively, if the purchaser confirms that the purchaser has not taken out the product displayed in the area AR1 from the display area, the purchaser touches the checkbox CB2 of "deny". Alternatively, if the purchaser has taken out that product displayed in the area AR1 from the display area and confirms that the product is already correctly included in the list displayed in the area AR2, the purchaser touches the checkbox CB2 of "deny". This applies to a case where, even though the product taken out by the first purchaser is correctly registered in the purchased product list 12a of the first purchaser, almost at the same time, a product of the same item taken out by a second purchaser is set as an unidentified product and the first purchaser is set as a candidate purchaser.

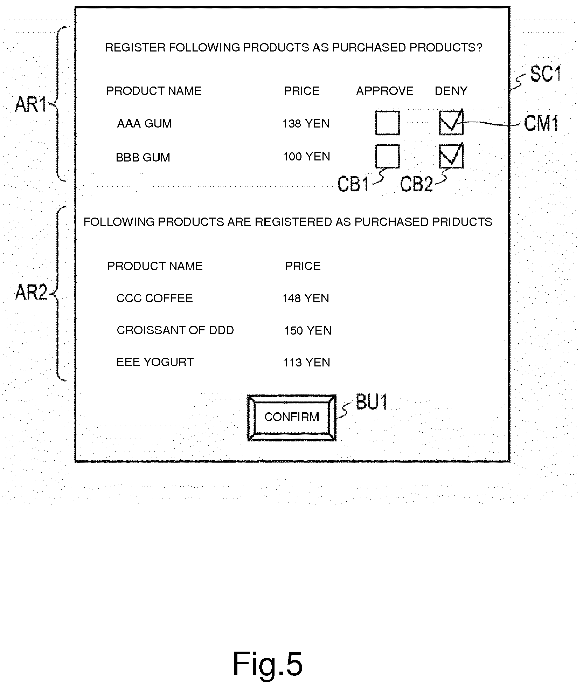

Fig. 5 is a diagram showing the confirmation screen SC1 after the purchaser touches the checkboxes. Fig. 5 shows a case where the purchaser touches the checkbox CB2 for each of the unidentified products and a check mark CM1 is displayed in each checkbox CB2. It should be noted that the confirmation screen SC1 is changed in such a manner by the purchaser terminal 200. It should be noted that, in a case where there are a plurality of candidate purchasers, confirmation screens corresponding to the respective candidate purchasers are displayed on the plurality of purchaser terminals 200 of those candidate purchasers.

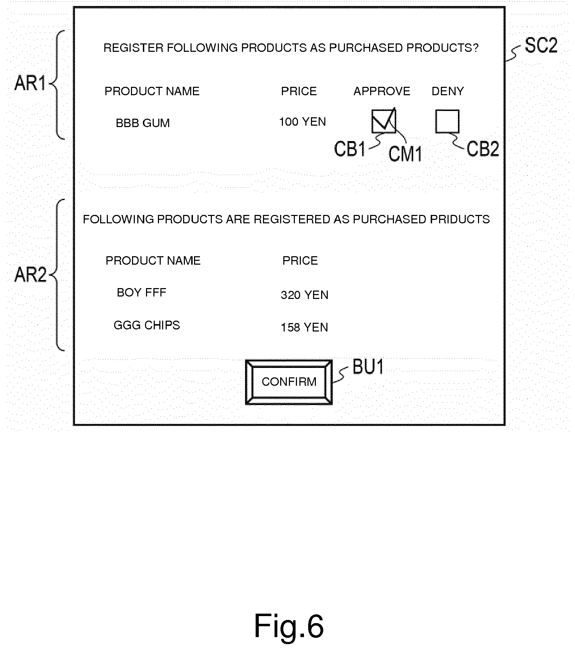

Fig. 6 is a diagram showing a confirmation screen SC2 as another example. The confirmation screen SC2 is displayed on the purchaser terminal 200 of the second purchaser as another candidate purchaser in a case where the confirmation screen SC1 shown in Fig. 5 is displayed on the purchaser terminal 200 of the first purchaser.

The confirmation screen SC2 includes the areas AR1 and AR2 and the button BU1 as in the case of the confirmation screen SC1, but the confirmation screen SC2 is different from the confirmation screen SC1 in that details displayed in the areas AR1 and AR2 correspond to the unidentified product list 12b and the purchased product list 12a that are associated with the second purchaser. Further, the confirmation screen SC2 is obtained after the second purchaser touches the checkbox CB1, in which a check mark CM1 is displayed in the checkbox CB1.

After finishing confirmation on the confirmation screen displayed in the purchaser terminal 200 of the purchaser, the purchaser touches the button BU1. It should be noted that a case where the purchaser has difficulty of determining which of the checkboxes CB1 and CB2 is to be touched is assumed. In this regard, it is permitted to touch the button BU1 without touching any of the checkboxes CB1 and CB2. When the button BU1 is touched in such a manner, the purchaser terminal 200 transmits a confirmation notification to the wireless access point 3 and then to the sales management apparatus 1, the confirmation notification including results of touches to the checkboxes CB1 and CB2 and the purchaser code. This confirmation notification is transmitted to the sales management apparatus 1 via the wireless access point 3 through the network 5 (e.g., LAN). The confirmation notification is then received by the communication interface 14 of the sales management apparatus 1.

In Act8 of Fig. 3, the processor 11 waits until the purchaser terminal 200, which is the destination of the request in Act7, transmits a confirmation notification. When the communication interface 14 receives the confirmation notification transmitted from the corresponding purchaser terminal 200, the processor 11 then determines Yes and proceeds processing of Act9. In Act9, the processor 11 confirms whether an "approve" is selected for any of the unidentified products or not. If the "approve" is selected, the processor 11 determines Yes and proceeds to processing of Act10.

In Act10, the processor 11 updates the purchased product list 12a, which is associated with the purchaser code included in the confirmation notification, so as to include the product code of the unidentified product for which the "approve" has been selected. In Act11, the processor 11 updates the unidentified product list 12b, which is associated with the purchaser code included in the confirmation notification, so as to delete the unidentified product data 122 of the unidentified product for which the "approve" has been selected.

In Act12, the processor 11 updates the unidentified product list 12b associated with a purchaser code different from the purchaser code included in the confirmation notification. Specifically, the processor 11 searches for other unidentified product data 122, which includes an unidentified product code included in the unidentified product data 122 deleted in Act11. If appropriate unidentified product data 122 exists, the processor 11 updates the unidentified product list 12b including that unidentified product data 122 so as to delete that unidentified product data 122.

The processor 11 subsequently proceeds to processing of Act13. It should be noted that, if the "approve" is not selected, the processor 11 determines No in Act9, skips Act10 to Act12, and proceeds to processing of Act13. In Act13, the processor 11 confirms whether a "deny" is selected for any of the unidentified products. If the "deny" is selected, the processor 11 determines Yes and proceeds to processing of Act14.

In Act14, the processor 11 changes the status 122c to "denied", the status 122c being included in the unidentified product data 122 on the unidentified product for which the "deny" has been selected. It should be noted that, when another unidentified product for which the same purchaser is a candidate purchaser occurs, the processor 11 requests again the purchaser terminal 200 of that purchaser to display the confirmation screen in Act7. At that time, the processor 11 does not display, on the confirmation screen, an unidentified product with the unidentified product data 122 including the status 122c of "denied".

In other words, the processor 11 classifies an unidentified product as a purchased product to be purchased by the purchaser or not. The processor 11 updates the purchased product list 12a so as to include the product code that is an identification code of the product classified as a purchased product, and updates the unidentified product list 12b so as not to include the product code described above. The processor 11 executes the information processing based on the sales management program in such a manner, and thus the computer including the processor 11 as the central portion functions as classification means, third update means, and fourth update means.

The processor 11 subsequently proceeds to processing of Act15. It should be noted that if the "deny" is not selected, the processor 11 determines No in Act13, skips Act14, and proceeds to processing of Act15. In Act15, the processor 11 confirms whether reception of the confirmation notifications from all the purchaser terminals 200, which are destinations of the request in Act7, is completed or not. If the reception of the confirmation notifications is not yet completed, the processor 11 determines No and returns to a standby state of Act8. If a confirmation notification from another purchaser terminal 200 is received, the processor 11 executes the processing of Act9 to Act14 accordingly, in the same manner as described above.

In such a manner, for example, assuming that the first purchaser first touches the button BU1 when the confirmation screen SC1 is in the state shown in Fig. 5, the processor 11 proceeds to the processing of Act14 through the processings of Act9 and Act13. The processor 11 then changes the status 122c to "denied" in the unidentified product data 122 on each of the "AAA gum" and the "BBB gum" included in the unidentified product list 12b associated with the first purchaser. Thus, in a case where the unidentified product list 12b maintains this state and where another unidentified product for which the first purchaser is a candidate purchaser occurs, the "AAA gum" and the "BBB gum" are not displayed on the confirmation screen.

Next, assuming that the second purchaser touches the button BU1 when the confirmation screen SC2 is in the state shown in Fig. 6, the processor 11 executes the processing of Act10 to Act12 through the processing of Act9. In other words, the processor 11 updates the purchased product list 12a, which is associated with the second purchaser, so as to include the product code of the "BBB gum", and the processor 11 updates the unidentified product list 12b associated with the second purchaser so as to delete the product code of the "BBB gum". Moreover, the processor 11 updates the unidentified product list 12b associated with the first purchaser so as to delete the product code of the "BBB gum". If the reception of the confirmation notifications from all the purchaser terminals 200, which are destinations of the request in Act7, is completed, the processor 11 determines Yes in Act15 and terminates the information processing shown in Fig. 3.

When finishing taking out all products to be purchased from the display area, the purchaser leaves the shopping floor through a first predetermined place (e.g., the exit of the shopping floor) and is further headed to a second predetermined place (e.g., the exit of the store). When determining that the purchaser has passed through the exit of the shopping floor, that is, the purchaser has left the shopping floor, on the basis of the detected data output from the sensors 2, the processor 11 starts information processing for checking unidentified products as will be described below, which is to be performed for the purchaser (hereinafter, referred to as target purchaser).

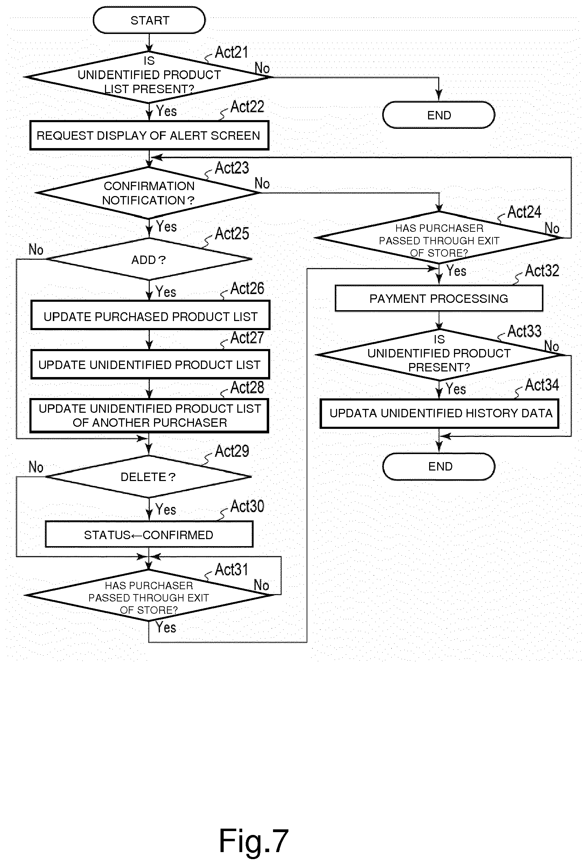

Fig. 7 is a flowchart showing information processing of the processor 11 for checking unidentified products. The processor 11 executes the information processing according to the sales management program stored in the main memory 12 or the auxiliary storage unit 13. It should be noted that details of the information processing to be described below are examples. For the information processing to be described below, various types of information processing capable of obtaining a similar result can be appropriately used.

In Act21, the processor 11 confirms whether an unidentified product list 12b associated with a target purchaser includes an unidentified product or not. If the unidentified product list 12b includes even one piece of unidentified product data 122, the processor 11 determines Yes and proceeds to processing of Act22.

In Act22, the processor 11 requests the attendant terminal 4 to display an alert screen. Specifically, the processor 11 transmits request data, which includes screen data for displaying the alert screen, from the communication interface 14 to the attendant terminal 4 through the network 5. The screen data for displaying the alert screen described above includes data of an appropriate purchased product list 12a and data of the unidentified product list 12b. It should be noted that, in a case where there are a plurality of attendant terminals 4, the processor 11 may transmit the above-mentioned request data to the plurality of attendant terminals 4 or may transmit the above-mentioned request data to only an attendant terminal 4 conforming to a predetermined condition. As an example, the processor 11 transmits the above-mentioned request data to only a single attendant terminal 4 at the position closest to the target purchaser. The request data is transmitted to the attendant terminal 4 via the network 5. When receiving the request data thus transmitted, the attendant terminal 4 displays the alert screen on the basis of the screen data described above. For display of the alert screen in the attendant terminal 4, for example, a function of a web browser or the like can be used. Thus, the alert screen is visually recognized by a sales-person responsible for the attendant terminal 4. The processing of requesting to display the alert screen in such a manner is an example of notification processing for notifying a sales-person, as a predetermined notification target person, of the details of the unidentified product list 12b. The processor 11 executes the information processing based on the sales management program in such a manner, and thus the computer including the processor 11 as the central portion functions as notification means.

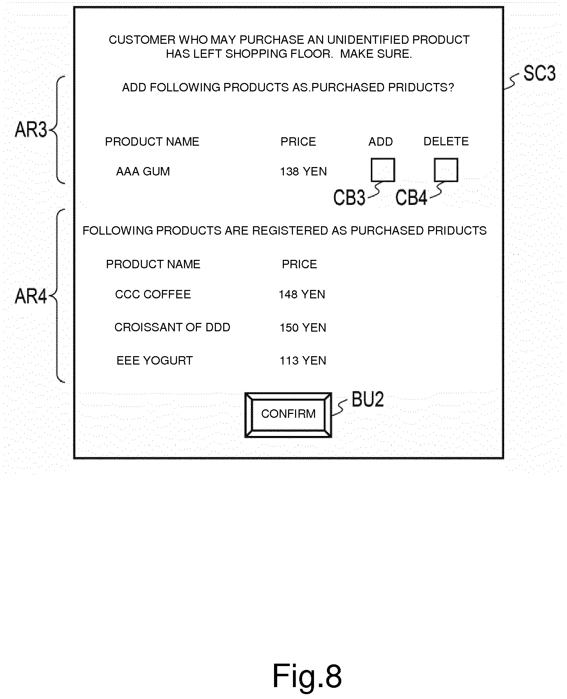

Fig. 8 is a diagram showing an alert screen SC3 as an example. The alert screen SC3 includes areas AR3 and AR4 and a button BU2. The area AR3 shows a list of unidentified products and also displays a GUI image for receiving an instruction to determine whether to add the unidentified products as products to be purchased (purchased products). Specifically, the area AR3 displays a product name, a price, and checkboxes CB3 and CB4 of "add" and "delete", for each of the products distinguished by the product codes included in the unidentified product list 12b associated with a target purchaser.

It should be noted that the alert screen SC3 is an example in a case where an "AAA gum" is already included in the unidentified product list 12b associated with the target purchaser. For example, this applies to a case where the target purchaser is the first purchaser in the specific example described above and where the first purchaser denies purchase registration for the "AAA gum" as shown in the example of Fig. 5, whereas other candidate purchasers do not approve the purchase registration for the "AAA gum".

The area AR4 displays a list of the purchased products. Specifically, the area AR4 displays a product name and a price for each of the products distinguished by the product codes included in the purchased product list 12a associated with the target purchaser. The button BU2 is a button for the sales-person to give an instruction to determine setting of confirmation results. It should be noted that, when creating the screen data of the alert screen SC3, the processor 11 acquires the product name and the price from a predetermined product database, for example.

The sales-person confirms the alert screen displayed on the attendant terminal 4, confirms the products carried by the target purchaser, and confirms whether a product considered as a unidentified product is included in the products carried by the target purchaser and is also registered as a product to be purchased (purchased product) or not. If the products carried by the target purchaser include a product matched with the above condition, the sales-person touches the checkbox CB3 regarding that product. Further, if the products carried by the target purchaser include a product not matched with the above condition, the sales-person touches the checkbox CB4 regarding that product. It should be noted that, although not shown in the figure, in response to the touch to the checkbox CB3 or the checkbox CB4, the attendant terminal 4 updates the alert screen so as to display a check mark as shown in Fig. 5. After finishing confirmation on all the unidentified products, the sales-person touches the button BU2. When the button BU2 is touched in such a manner, the attendant terminal 4 transmits a confirmation notification to the wireless access point 3 and then to the sales management apparatus 1, the confirmation notification including results of touches to the checkboxes CB3 and CB4 and the purchaser code. This confirmation notification is transmitted to the sales management apparatus 1 via the wireless access point 3 through the network 5 (e.g., LAN). The confirmation notification is then received by the communication interface 14.

In Act23 of Fig. 7, the processor 11 confirms whether the confirmation notification has been transmitted from the attendant terminal 4 or not. If the confirmation notification has not been transmitted, the processor 11 determines No and proceeds to processing of Act24. In Act24, the processor 11 confirms whether the target purchaser has passed through the exit of the store and gone out of the store. If the target purchaser does not yet pass through the exit of the store, the processor 11 determines No and returns to the processing of Act23. In such a manner, the processor 11 waits until the confirmation notification is transmitted or the target purchaser leaves the store in Act23 and Act24.

When the communication interface 14 receives the confirmation notification transmitted from the attendant terminal 4, the processor 11 determines Yes in Act23 and proceeds to processing of Act25. In Act25, the processor 11 confirms whether an instruction to add any of the unidentified products is issued or not. If the instruction of addition is issued, the processor 11 determines Yes and proceeds to processing of Act26. In Act26, the processor 11 updates the purchased product list 12a, which is associated with the purchaser code included in the confirmation notification, so as to include the product code of the unidentified product for which the instruction of addition has been issued.

In Act27, the processor 11 updates the unidentified product list 12b, which is associated with the purchaser code included in the confirmation notification, so as to delete the unidentified product data 122 of the unidentified product for which the instruction of addition has been issued. In Act28, the processor 11 updates the unidentified product list 12b associated with a purchaser code different from the purchaser code included in the confirmation notification. Specifically, the processor 11 searches for other unidentified product data 122, which includes an unidentified product code included in the unidentified product data 122 deleted in Act27. If appropriate unidentified product data 122 exists, the processor 11 updates the unidentified product list 12b including that unidentified product data 122 so as to delete that unidentified product data 122.

The processor 11 subsequently proceeds to processing of Act29. It should be noted that, if the instruction of addition is not issued, the processor 11 determines No in Act25, skips Act26 to Act28, and proceeds to processing of Act29. In Act29, the processor 11 confirms whether an instruction to delete any of the unidentified products is issued or not. If the instruction of deletion is issued, the processor 11 determines Yes and proceeds to processing of Act30.

In Act30, the processor 11 changes the status 122c to "confirmed", the status 122c being included in the unidentified product data 122 on the unidentified product for which the instruction of deletion has been issued. The processor 11 subsequently proceeds to processing of Act31. It should be noted that, if the instruction of deletion is not issued, the processor 11 determines No in Act29, skips the processing of Act30, and proceeds to processing of Act31.

In Act31, the processor 11 waits until the target purchaser passes through the exit of the store and goes out of the store. If the target purchaser passes through the exit of the store, the processor 11 determines Yes in Act31 and proceeds to processing of Act32. It should be noted that, if the target purchaser passes through the exit of the store in the waiting state of Act23 and Act24, the processor 11 determines Yes in Act24, skips the processing of Act25 to Act31, and proceeds to processing of Act32. In Act32, the processor 11 performs payment processing for making payment for the product included in the purchased product list 12a associated with the target purchaser by using credit card information registered in advance or the like.

In Act33, the processor 11 confirms whether there is an unidentified product or not for the target purchaser. If the unidentified product list 12b associated with the target purchaser includes even one piece of unidentified product data 122, the processor 11 determines Yes and proceeds to processing of Act34. In Act34, the processor 11 creates or updates the unidentified history data 13a so as to include the unidentified product list 12b associated with the target purchaser. The processor 11 subsequently terminates the information processing shown in Fig. 7. In such a manner, the unidentified history data 13a is a collection of the unidentified product lists 12b in each of which the unidentified product data 122 is left when the purchaser leaves the store.

It should be noted that, if the unidentified product list 12b associated with the target purchaser does not include even one piece of unidentified product data 122, the processor 11 determines No in Act33, skips the processing of Act34, and terminates the information processing shown in Fig. 7.

If the unidentified product list 12b associated with the purchaser who has left the shopping floor does not include even one piece of unidentified product data 122, the processor 11 determines No in Act21 and terminates the information processing shown in Fig. 7 without performing the processing of Act22 to Act34. In other words, the processor 11 does not display the alert screen nor update the unidentified history data 13a in the following cases.
(1) Case where there are no unidentified products regarding an applicable purchaser.
(2) Case where the purchaser approves purchase of all unidentified products by the time the purchaser leaves the shopping floor.
(3) Case where the purchaser approves purchase of some unidentified products by the time the purchaser leaves the shopping floor and another purchaser approves purchase of the rest of the unidentified products.
(4) Case where another purchaser approves purchase of all unidentified products by the time the former purchaser leaves the shopping floor.

As described above, the sales management apparatus 1 registers an unidentified product, for which the sales management apparatus 1 fails to identify a purchaser who has taken out that unidentified product from the display area, in the unidentified product list 12b associated with each of all the purchasers who may have taken out the unidentified product. Therefore, by referring to this unidentified product list 12b, it is possible to easily confirm a product that is carried by a purchaser but may not be registered in the purchased product list 12a. As a result, it is possible to suitably take measures in a store in a case of failing to identify a purchaser who has taken out the product from the display area. For example, as in the embodiment described above, the sales-person confirms whether a product included in the unidentified product list 12b is included in products to be purchased by the purchaser (products carried by the purchaser), and if so, sales registration of that product can be performed.

Further, the sales management apparatus 1 notifies the purchaser, who is associated with the unidentified product list 12b, of whether to purchase a product registered in the unidentified product list 12b. The sales management apparatus 1 then adds the product, for which the purchaser approves purchase thereof, to the purchased product list 12a of the purchaser, and excludes the product from the unidentified product list 12b of the purchaser and that of other purchasers. It is assumed that many purchasers honestly approve the purchase of products that have been taken out of the display area by themselves for the purpose of purchase thereof if the purchasers are asked about the purchase thereof. Therefore, as long as the purchasers act in such a manner, the unidentified product quickly ceases to be an unidentified product and is correctly registered as a purchased product.

It should be noted that the sales management apparatus 1 leaves the unidentified product, for which the purchaser denies purchase in response to an inquiry (request to display the confirmation screen), in the unidentified product list 12b, as long as another purchaser does not approve purchase of the same unidentified product. In other words, in a case where the purchaser denies purchase of the products that have been taken out of the display area by themselves for the purpose of purchase thereof in response to an inquiry for those products, the products are left as unidentified products in the unidentified product list 12b, and the purchaser will be subjected to a check by a sales-person when the purchaser leaves the store. Therefore, an unsuitable denial by the purchaser as described above is inhibited.

Further, the sales management apparatus 1 automatically makes payment for the products already registered in the purchased product list 12a associated with the purchaser when the purchaser leaves the store. Therefore, if the purchaser leaves the store without being subjected to a check for the unidentified products for some reasons, the unidentified product data 122 is left in the unidentified product list 12b associated with the purchaser. Further, even if the sales-person checks the unidentified products, when the purchaser conceals and carries the unidentified product, it may be difficult to reliably check the concealed-and-carried unidentified products. In this regard, the sales management apparatus 1 is configured to leave, in the unidentified product list 12b, the unidentified product data 122 regarding the unidentified product, for which the sales-person confirms that the purchaser does not carry the unidentified product. After the payment for those products, the sales management apparatus 1 then adds the unidentified product list 12b including the unidentified product data 122 to the unidentified history data 13a. In such a manner, follow-up verification for the unidentified products that do not reach the payment can be performed on the basis of the unidentified history data 13a. For example, if a case where an unidentified product associated with the same purchaser does not reach payment frequently occurs, it is possible to suspect that the purchaser commits an injustice. In a case where such an injustice is suspected and where the unidentified product data 122 associated with the purchaser includes many products each having the status 122c of "unconfirmed" or "denied", there is a high possibility that the purchaser leaves the store without being subjected to the check by the sales-person. Further, in a case where the unidentified product data 122 associated with the purchaser includes many products each having the status 122c of "confirmed", there is a high possibility that the purchaser slips through the check by the sales-person while carrying the concealed products, for example.

This embodiment can be variously modified as follows. Part of the above-mentioned information processing performed by the processor 11 may be omitted. For example, the processor 11 may not perform the processing of Act7 to Act15 or the processing of Act22, Act23, and Act25 to Act31. In other words, in a case where an unidentified product occurs, a check by the sales-person is basically performed and a check by the purchaser may not be performed, or a check by the sales-person may not be performed on the assumption that the purchaser adequately performs confirmation.

The processor 11 may not perform both the processing of Act7 to Act15 and the processing of Act22, Act23, and Act25 to Act31. In this case as well, a generation status of unidentified products can be grasped by the follow-up verification of the unidentified product lists 12b collected as the unidentified history data. Thus, for example, measures such as improving the arrangement of the sensors 2 can be taken.

At least one of the purchased product list 12a, the unidentified product list 12b, and the unidentified history data 13a may be stored by a storage device provided outside the sales management apparatus 1.

The functions of the sales management apparatus 1 can also be achieved by causing the attendant terminal 4 or an apparatus having another function, such as a POS server included in a POS system, to execute the above-mentioned information processing.

The functions of the sales management apparatus 1 can also be achieved as a sales management system using a plurality of apparatuses in combination, in which the information processing shown in Fig. 3 and the information processing shown in Fig. 7 are shared and executed by different information processing apparatuses, for example.

For the sales management apparatus 1, for example, a general-purpose information processing apparatus may be used as hardware, and the sales management program may be written in an auxiliary storage unit 13 of the information processing apparatus. It should be noted that the sales management program may be stored in the auxiliary storage unit 13, so that the information processing apparatus described above may be provided as the sales management apparatus 1, or the information processing apparatus described above may be provided separately from the sales management program. In the latter case, the sales management program may be provided by being recorded on a removable recording medium such as a magnetic disk, a magneto-optical disk, an optical disc, or a semiconductor memory or may be provided via a network. Thus, the sales management program is written in the auxiliary storage unit 13 under the operation of a user of the sales management apparatus 1, for example.

A part of or all of the functions achieved by the processor 11 through the information processing can also be achieved by hardware that executes information processing that is not based on a program, such as a logic circuit. Further, the functions described above can also be achieved by using the hardware such as the above-mentioned logic circuit and software control in combination.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A sales management system that manages a purchased product of a purchaser who comes into a store, the sales management system comprising:
a sensor that outputs detected data on a motion of the purchaser and a movement of a product from a display area of the product;
a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser; and
a processor that
monitors the motion of the purchaser and the movement of the product from the display area on the basis of the detected data output from the sensor,
identifies, when the product is moved from the display area, the purchaser who has taken out the product from the display area on the basis of a monitoring result,
updates, when the purchaser is identified, the purchased product list associated with the identified purchaser, the updated purchased product list including the identification code of the product,
determines at least one purchaser who may have taken out the product from the display area on the basis of the monitoring result, and
updates, when the purchaser fails to be identified, the unidentified product list associated with the determined at least one purchaser, the updated unidentified product list including the identification code of the product.

2. The sales management system according to Claim 1, wherein
the processor
determines the purchaser who comes into the store on the basis of the monitoring result, and
creates the unidentified product list associated with the purchaser who comes into the store.

3. The sales management system according to Claim 1 or 2, further comprising a communication interface that communicates with an information processing terminal operated by a sales-person of the store and portable information terminals operated by a plurality of purchasers, wherein
the processor
transmits data of the unidentified product list to a predetermined terminal among the information processing terminal and the portable information terminals of the plurality of purchasers via the communication interface, and thereby
performs notification processing for notifying a notification target person of details of the unidentified product list, the notification target person operating the predetermined terminal.

4. The sales management system according to Claim 3, wherein
the processor transmits the data of the unidentified product list to the portable information terminal operated by the purchaser associated with the unidentified product list, the portable information terminal being as the predetermined terminal.

5. The sales management system according to Claim 4, wherein
the processor transmits, when the unidentified product list is updated, the data of the updated unidentified product list to the portable information terminal operated by the purchaser associated with the updated unidentified product list.

6. The sales management system according to Claim 4, wherein
the processor
classifies a product identified by the identification code included in the unidentified product list as a purchased product to be purchased by the purchaser associated with the unidentified product list or not,
updates the purchased product list associated with the purchaser who is the same as the purchaser associated with the unidentified product list, the updated purchased product list including the identification code of the product classified as the purchased product, and
updates the unidentified product list, the updated unidentified product list excluding the identification code included in the purchased product list.

7. The sales management system according to any one of Claims 3 to 6, wherein
when the processor determines that the purchaser has passed through a first predetermined place in the store on the basis of the monitoring result, if the unidentified product list associated with the purchaser who has passed through the first predetermined place includes the identification code,
the processor
transmits the data of the unidentified product list to the information processing terminal via the communication interface, and thereby
performs the notification processing as processing for notifying a sales-person of details of the unidentified product list.

8. The sales management system according to Claim 7, wherein
when the processor determines that the purchaser has passed through the first predetermined place and through a second predetermined place in the store on the basis of the monitoring result,
the processor makes payment for the product identified by the product code included in the purchased product list associated with the purchaser who has passed through the first predetermined place and the second predetermined place.

9. The sales management system according to Claim 8, wherein
if the unidentified product list associated with the purchaser who has passed through the first predetermined place and the second predetermined place after completion of the payment includes the identification code,
the processor creates unidentified history data associated with the purchaser, the unidentified history data including the unidentified product list.

10. A sales management method for a sales management system that manages a purchased product of a purchaser who comes into a store, the sales management system including a sensor that outputs detected data on a motion of the purchaser and a movement of a product from a display area of the product in a store, and a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser, the sales management method comprising:
monitoring the motion of the purchaser and the movement of the product from the display area on the basis of the detected data output from the sensor;
identifying, when the product is moved from the display area, the purchaser who has taken out the product from the display area on the basis of a monitoring result;
updating, when the purchaser is identified, the purchased product list associated with the identified purchaser, the updated purchased product list including the identification code of the product;
determining at least one purchaser who may have taken out the product from the display area on the basis of the monitoring result; and
updating, when the purchaser fails to be identified, the unidentified product list associated with the determined at least one purchaser, the updated unidentified product list including the identification code of the product.

11. A non-transitory computer readable medium storing a program causing a computer to execute the method according to claim 10.

12. A sales management apparatus that manages a purchased product of a purchaser who comes into a store, the sales management system comprising:
a memory that stores a purchased product list and an unidentified product list in association with the purchaser who comes into the store, the purchased product list being a list of an identification code of a product identified as having been taken out of the display area by the associated purchaser, the unidentified product list being a list of an identification code of a product that is not identified as having been taken out of the display area but may have been taken out of the display area by the associated purchaser; and
a processor that
monitors a motion of the purchaser and a movement of the product from a display area on the basis of a detected data output from a sensor disposed within the store;
identifies, when the product is moved from the display area, the purchaser who has taken out the product from the display area on the basis of a monitoring result,
updates, when the purchaser is identified, the purchased product list associated with the identified purchaser, the updated purchased product list including the identification code of the product,
determines at least one purchaser who may have taken out the product from the display area on the basis of the monitoring result, and
updates, when the purchaser fails to be identified, the unidentified product list associated with the determined at least one purchaser, the updated unidentified product list including the identification code of the product.
